# EUROPÄISCHE PATENTSCHRIFT

(11) **EP 0 544 876 B1**
(45) Veröffentlichungstag und Bekanntmachung des Hinweises auf die Patenterteilung: **12.10.1994**
(21) Anmeldenummer: 92912898.1
(22) Anmeldetag: 26.06.1992
(51) Int. Cl.: F23G 5/00

(54) **VERFAHREN ZUR KOMBINIERTEN KLÄRSCHLAMM- UND MÜLLVERBRENNUNG**
PROCESS FOR THE COMBINED INCINERATION OF SEWAGE AND RUBBISH
PROCEDE D'INCINERATION SIMULTANEE DE BOUES DE CURAGE ET DE DECHETS

(30) Priorität: 28.06.1991 DE 4121968
(43) Veröffentlichungstag der Anmeldung: 09.06.1993
(73) Patentinhaber: NOELL Abfall- und Energietechnik GmbH, D-41464 Neuss (DE)
(72) Erfinder: KÜNSTLER, Hans, CH-8142 Uitikon (CH); WACHTER, Erwin, CH-8048 Zürich (CH); NÜESCH, Peter, CH-8307 Bisikon (CH); SCHOLL, Kurt, CH-4800 Zofinger (CH)
(74) Vertreter: Köckeritz, Günter
(86) Internationale Anmeldenummer: DE9200531
(87) Internationale Veröffentlichungsnummer: WO9300555

(56) Entgegenhaltungen:
- Patent Abstracts of Japan, vol.3, no. 088 (M-067) 27. Juli 1979 & JP-A-54 063564 (BABCOCK HITACHI) 22. Mai 1979
- Patent Abstracts of Japan, vol. 7, no. 120 (M-217) (1265) 25. Mai 1983 & JP-A-58 037416 (SHIN NIPPON SEITETSU) 4. März 1983
- Patent Abstracts of Japan, vol. 13, no. 237 (M-833) (3585) 5. Juni 1989 & JP-A-10 49812 (KUBOTA) 27. Februar 1989

## Beschreibung

Die Erfindung betrifft ein Verfahren zur Klärschlammund Müllverbrennung, wobei der mechanisch entwässerte Klärschlamm aus kommunalen und/oder industriellen Abwasserreinigungsanlagen in Kombination mit einer Müllverbrennungsanlage verbrannt wird.

Zur schadlosen Beseitigung von Klärschlämmen sind bereits Verfahren entwickelt worden, die das Problem über eine Trocknung und anschließende Verbrennung zu lösen versuchen.
Die DE-A- 35 42 004 beschreibt ein Verfahren zum Trocknen von Klärschlämmen mit erwärmter Abluft aus der Klinkerkühlung bei der Zementklinkerherstellung. Das beschriebene Verfahren ist direkt auf die Zementherstellung zugeschnitten. Die Trocknung und Verbrennung von Klärschlamm findet nicht in derselben Verfahrensstufe statt. Der separat getrocknete Schlamm wird dem Sinterofenbrenner als Brennstoff zugeführt.

Die DE-A- 36 35 068 beschreibt ein Verfahren zum Unschädlichmachen von kontaminierten Gut in einem indirekt beheizten Entgasungsprozess. Die Trocknung und Verbrennung von kontaminiertem Gut findet auch hier nicht in derselben verfahrenstechnischen Stufe statt, wobei der Entgasungsprozeß indirekt beheizt wird.

Dokument PATENT ABSTRACTS OF JAPAN, vol. 3, no. 088 (M-067), 27. Juli 1979 beschreibt ein Verfahren zur Kombinierten Schlamm und Müllverbrennung.

Die DE-A- 39 10 215 beschreibt ein Verfahren zur Trocknung und Verbrennung von Klärschlamm aus einem Kohlekraftwerk.
Auch hier finden Trocknung und Verbrennung des Klärschlammes nicht in derselben verfahrenstechnischen Stufe statt. Die Brüden werden in der Feuerungsleistungszone verbrannt und der getrocknete Schlamm wird der zu verbrennenden Kohle beigemischt. Die Trocknung erfolgt indirekt mit kondensierendem Dampf. Durch die Brüden aus der Trocknung des Klärschlamms wird der Rauchgasvolumenstrom bei der Kohleverbrennung vergrößert.

Aus dem genannten Stand der Technik ist kein Verfahren bekannt, bei dem die Trocknung, Verschwelung und Verbrennung in einer verfahrenstechnischen Stufe abläuft. Gerade dieser Verfahrensschritt ist jedoch dafür verantwortlich, daß sich die für die Entstickung in der Müllverbrennungsanlage erforderlichen Reduktionsmittel bilden und sich damit der erfindungsgemäße Erfolg des Verfahrens einstellt.

Der Erfindung liegt die Aufgabe zugrunde, ein Verfahren zu entwickeln, wonach Klärschlamm aus kommunalen und industriellen Abwässerreinigungsanlagen sowie Müll in Müllverbrennungsanlagen möglichst umweltschonend mit günstiger Energiebilanz und geringen technischen Aufwand verbrannt werden kann.

Die Aufgabe der Erfindung wird dadurch gelöst, daß der auf einen Trockensubstanzanteil von 20 bis 30 % vorentwässerte Klärschlamm in einen Drehrohrofen geleitet wird. Im Gegenstrom dazu wird Rauchgas aus einer Müllverbrennungsanlage mit 600 bis 900°C durch den Drehrohrofen gesogen. Dieses dient zur Stützung der Feuerung im Drehrohrofen und der Klärschlamm kann ohne zusätzliche Fremdenergie in einer verfahrenstechnischen Stufe getrocknet, verschwelt und verbrannt werden. Dabei entstehen im Drehrohrofen Brüden, die einen hohen Anteil an nicht verbrannten anorganischen und organischen Gasen sowie Ammoniak (NH₃) enthalten. Diese Brüden werden zur Nachverbrennung in die Müllverbrennungsanlage eingedüst und wirken dabei reduzierend auf die Stickoxidbildung bei der Müllverbrennung. Der Müllverbrennungsbetrieb wird dabei nur unwesentlich beeinflußt, da die durch die Heissgase entzogene Wärmemenge in Form von fühlbarer Wärme und heizwertreicher unverbrannter Gase in die Müllverbrennungsanlage zurückgeführt wird. Mit dem erfindungsgemäßen Verfahren können Müll-/Schlammverhältnisse mit Mischheizwerten unter 7000 kJ/kg verbrannt werden, was bei der Mischung der einzelnen Komponenten und der gleichzeitigen Verbrennung im selben Ofen ohne Zusatzenergie nicht möglich wäre. Für die Ausführung des Verfahrens können bestehende Müllverbrennungsanlagen nachgerüstet werden, ohne daß die nachgeschalteten Verfahrensstufen wie Kessel, Filter, Rauchgasreinigung, Saugzug etc. geändert werden müssen. Da die Rauchgasmenge aus der Müllverbrennung bei gleichbleibenden Mülldurchsatz. nicht zunimmt. Wegen der gleichbleibenden Rauchgasmenge wird die absolute Emissionsbelastung der Gesamtanlage kleiner als bei der Verbrennung der Komponenten in voneinander unabhängigen Anlagen. Durch die erfindungsgemäße Verfahrensführung kann außerdem die Stickstoffoxidbildung in der Müllverbrennungsanlage verringert werden, da die Gase aus der Schwel- und Trocknungszone (vor allem NH₃) des Klärschlammverbrennungsdrehrohrofens reduzierend wirken.

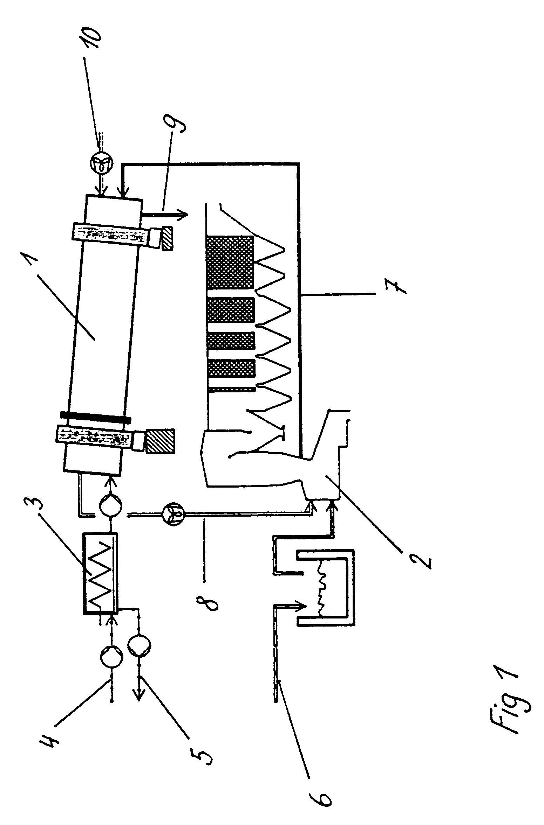

Im folgenden soll anhand einer schematischen Darstellung das erfindungsgemäße Verfahren näher erläutert werden. Fig. 1 zeigt den Drehrohrofen in Verbindung mit einer Müllverbrennungsanlage. Der Klärschlamm 4 in einer mechanischen Vorentwässerungsanlage auf einen Trockensubstanzanteil von 20 bis 30 % vorentwässert und zur Verbrennung in einen Drehrohrofen 1 geleitet. Im Gegenstrom dazu wird Rauchgas 7 aus der Müllverbrennungsanlage 2 mit 600 bis 900°C durch den Drehrohrofen 1 gesogen. Falls erforderlich, kann in den Drehrohrofen 1 noch zusätzlich Verbrennungsluft 10 ventiliert werden. Das Rauchgas wird zuerst in der Ausbrand- und Flammenzone des Drehrohrofens 1 erwärmt, strömt dann über die Vergasungs- und Entgasungszone zur Trockenzone, wobei es laufend abgekühlt wird. Bei Temperaturen zwischen 700 und 300°C und Sauerstoffgehalten unter 5 Vol.%feucht hinter der Flammenfront werden Pyrolysegase und leicht flüchtige Gase ausgetrieben. Dadurch entsteht ein hoher Anteil an nicht verbrannten Gasen, die zur Nachverbrennung in die Müllverbrennungsanlage 2 geleitet werden. Neben Ammoniak, welches vor allem in der Trocknungszone ausgetrieben wird, entstehen andere anorganische und organische Gase, die reduzierend auf die Stickstoffoxidbildung bei der Müllverbrennung wirken. Bei einem Müll-/Schlammmengenverhältnis von 4 (Schlamm: 100 % TS) werden dadurch Stickstoffoxidwerte von 100 mg/Nm³ bezogen auf 11 % O₂ erreicht. Diese so entstandenen Brüden 8 werden in die Müllverbrennungsanlage 2 eingedüst und im Feuerraum ausgebrannt. Der Müllverbrennungsbetrieb wird dabei nur unwesentlich beeinflußt, da die durch die Heissgase entzogene Wärmemenge in Form von fühlbarer Wärme und heizwertreiche und verbrannter Gase in den Müllofen zurückgeführt wird. Am Drehrohrofenaustrag fällt der verbrannte Klärschlamm in Form von Schlacken 9 an, die entweder deponiert oder weiteren Verwendungszwecken zugeführt werden.

## Patentansprüche

1. Verfahren zur kombinierten Klärschlamm- und Müllverbrennung, dadurch gekennzeichnet, daß
a) der auf einen Trockensubstanzanteil von 20 bis 30 % vorentwässerte Klärschlamm (4) in einen Drehrohrofen (1) geleitet wird,
b) zur Stützung der Feuerung Rauchgas (7) aus einer Müllverbrennungsanlage (2) mit einer Temperatur von 600 bis 900°C im Gegenstrom durch den Drehrohrofen (1) gesogen wird,
c) die dabei entstehenden Brüden (8), die einen hohen Anteil an nicht verbrannten anorganischen und organischen Gasen sowie Ammoniak enthalten, zur Nachverbrennung in die Müllverbrennungsanlage (2) eingedüst werden, wodurch die Stickstoffoxidbildung bei der Müllverbrennung reduziert wird.

2. Verfahren nach Anspruch 1, dadurch gekennzeichnet, daß die Trocknung, Verschwelung und Verbrennung des vorentwässerten Klärschlammes im Drehrohrofen (1) in einer verfahrenstechnischen Stufe abläuft.

3. Verfahren nach Anspruch 1 und 2, dadurch gekennzeichnet, daß die Trocknung, Verschwelung und Verbrennung des vorentwässerten Klärschlammes im Drehrohrofen (1) ohne zusätzliche Fremdenergie erfolgt.

## Claims

1. Method for the combined incineration of sewage sludge and refuse, characterised in that
a) the sewage sludge (4), which has been predrained to a dry matter content of between 20 and 30 %, is conducted into a rotary kiln (1),
b) to support the combustion, a counterflow of flue gas (7) from a refuse incinerator (2) at a temperature of between 600 and 900° C is drawn through the rotary kiln, (1),
c) the vapours (8), which are thus formed and contain a high content of unburnt, inorganic and organic gases, as well as ammonia, are injected into the refuse incinerator (2) for subsequent burning, whereby the formation of nitrogen oxides during refuse incineration is reduced.

2. Method according to claim 1, characterised in that the drying, slow burning and incineration of the predrained sewage sludge in the rotary kiln (1) are effected in one operational step.

3. Method according to claims 1 and 2, characterised in that the drying, slow burning and incineration of the predrained sewage sludge in the rotary kiln (1) are effected without additional outside energy.

## Revendications

1. Procédé d'incinération combinée de boues de curage et de déchets, caractérisé en ce que
a) les boues de curage (4) déshydratées préalablement jusqu'à une teneur en matière sèche de 20 à 30% sont amenées dans un four tubulaire tournant (1),
b) pour soutenir le chauffage, des gaz de fumée (7) provenant d'une installation d'incinération de déchets (2) sont aspirés à contre-courant à travers le four tubulaire tournant (1), à une température de 600 à 900°C,
c) les vapeurs (8) ainsi formées, qui contiennent une teneur élevée en gaz inorganiques et organiques non brûlés, et de l'ammoniac, sont injectées dans l'installation d'incinération de déchets (2) en vue de la postcombustion, moyennant quoi la formation d'oxyde d'azote lors de l'incinération des déchets est réduite.

2. Procédé selon la revendication 1, caractérisé en ce que l'assèchement, la carbonisation et l'incinération des boues de curage déshydratées préalablement se déroulent dans le four tubulaire tournant (1) lors d'une phase du procédé.

3. Procédé selon les revendications 1 et 2, caractérisé en ce que l'assèchement, la carbonisation et l'incinération des boues de curage déshydratées préalablement se font dans le four tubulaire tournant (1) sans énergie étrangère supplémentaire.
